# EUROPEAN PATENT APPLICATION

(11) **EP 1 967 441 A1**
(43) Date of publication of application: **10.09.2008**
(21) Application number: 06835111.3
(22) Date of filing: 15.12.2006
(51) Int. Cl.: B62D 1/19, B62D 5/04, G01L 3/10

(54) **ELECTRIC POWER STEERING DEVICE**

(30) Priority: 28.12.2005 JP 2005379180; 30.01.2006 JP 2006021098
(71) Applicant: NSK Ltd., Tokyo 141-8560 (JP)
(72) Inventor: SEGAWA, Toru, Maebashi-shi Gunma 371-8528 (JP)
(74) Representative: Jones, Nicolas Guy
(86) International application number: PCT/JP2006/325575
(87) International publication number: WO 2007/074723

(57) **Abstract**

The vehicle front side end portion of a lower column tube 2 is bent and fixed to the vehicle rear side end of a gear housing 13 by a screw bolt 18. A seal member 20 is press-fitted and fixed at a predetermined position between a radially inner circumference of the vehicle front side portion of the lower column tube 2 and an input shaft 4. The lower column tube 2 is fixedly secured to the gear housing 13, whereby the lower column tube 2 is positioned, and the seal member 20 is fixed between the input shaft 4 and the lower column tube 2. Components for torque sensing disposed in the gear housing 13 are arranged side by side along a radial direction.

## Description

### TECHNICAL FIELD

The present invention relates to an electric power steering apparatus in which a steering torque applied to an input shaft is sensed using a torque sensor and a steering assist torque generated by an electric motor in response to the sensed steering torque is transmitted to an output shaft via a reduction gear mechanism, and in particular to an electric power steering apparatus designed to be small in size.

### BACKGROUND ART

In automobile steering systems, what is called a power steering system that provides steering assist using an external power source is widely used. Conventionally, a vane hydraulic pump is used as the power source of the power steering apparatus, and in many instances the hydraulic pump is driven by the engine. However, it is difficult to use this type of power steering apparatus in light automobiles with a small displacement engine, since the hydraulic pump is ceaselessly driven in this type of power steering apparatus. Even in the case where it is used in an automobile with a relatively large displacement engine, an unignorable deteroration in fuel economy has been inevitable.

As a solution for these problems, electric power steering apparatuses that use an electric motor as a power source have been drawing attention in recent years. The electric power steering apparatus is advantageous in that it does not suffer from direct drive power loss in the engine since it uses as the power source for the electric motor an in-vehicle battery, that a deterioration in fuel economy can be suppressed since the electric motor is activated only when steering assist is provided, and that electronic control can be performed very easily.

In the power assist mechanism of the electric power steering apparatus, a steering torque applied to the input shaft is sensed by a torque sensor, and a steering assist torque generated by an electric motor is transmitted to an output shaft via a power transmission mechanism in response to the steering torque thus sensed.

In the electric power steering apparatus that is equipped with a reduction gear mechanism using a worm gear as the power transmission mechanism, a worm joined to the drive shaft of the electric motor meshes with a worm wheel, which is fixedly fitted to an output shaft that is connected with a rack and pinion mechanism of the steering apparatus.

In a type of such an electric power steering apparatus, the steering torque is sensed using a torsion bar joined to the input shaft connected to the steering wheel and the output shaft connected to the rack and pinion mechanism of the steering apparatus. In other words, one end of the torsion bar is joined to the input shaft, and the other end is joined to the output shaft. Since the torsion bar is twisted according to the magnitude of the steering torque applied to the steering wheel, the steering torque can be sensed accurately by determining the twist angle. If the steering torque is sensed accurately, it is made possible to output an appropriate steering assist torque.

As such a steering torque sensing apparatus, an apparatus in which the impedance of a coil provided in a housing is designed to be changed according to the twist angle of a torsion bar that is twisted by applied steering torque and the steering torque is calculated based on the change in the impedance has been known as disclosed in, for example, Japanese Patent Application Laid-Open No. 9-101212.

In the power assist mechanism of the electric power steering apparatus, among steering shafts including an upper steering shaft on which a steering wheel is attached on the vehicle rear side end thereof and a lower steering shaft that is spline-fitted therewith, the lower steering shaft serves as the input shaft, and the output shaft is connected to the rack and pinion mechanism of the steering apparatus on the vehicle front side thereof. Therefore, the entire length of the steering shaft needs to be designed to have a predetermined length depending on the vehicle.

On the other hand, the electric power steering apparatus is generally equipped with an energy absorbing mechanism to absorb impact at the time of vehicle collision. At the time of secondary collision in which the driver collides with the steering wheel upon vehicle collision, the energy absorbing mechanism allows the steering wheel to move toward the vehicle front by shortening the entire length of the electric power steering apparatus while consuming the energy of collision by deforming, cleaving and/or shearing an energy absorbing member to thereby mitigate the impact acting on the driver upon secondary collision. Since various mechanics of the energy absorbing mechanism have been known as conventional arts, detailed description thereof will be omitted.

To shorten the entire length of the electric power steering apparatus at the time when the energy absorbing mechanism operates, the steering shaft and the column tube are generally divided into upper and lower shaft members, and upper and lower column tubes respectively, which are slidably fitted to each other. In this structure, in order for the energy absorbing mechanism to absorb a certain amount of impact energy, it is necessary to provide a space in advance in which the upper shaft member and the upper column tube may slide over a length (which will be referred to as the collapse stroke) with no interference. To define the end of the collapse stroke, the electric power steering apparatus is provided with a stopper.

On the other hand, the vehicle front side end of the column tube is connected to the vehicle rear side end of the housing of the power assist mechanism. To enhance the strength of the connection of the column tube and the housing, it is necessary to maintain the connection strength to be higher than a predetermined level by, for example, designing the length of the connection portion to be long.

The aforementioned Japanese Patent Application Laid-Open No. 9-101212 (particularly, Fig. 1 of Japanese Patent Application Laid-Open No. 9-101212) teaches to provide an oil seal between the housing of the power assist mechanism and the input shaft at the input shaft side of the power assist mechanism. In this structure, since the oil seal is disposed between a torque sensor mechanism provided in the housing and the column tube, if the position of the collapse stroke end stopper constituted by the housing is arranged in such a way as to provide a sufficient collapse stroke for the steering shaft on the vehicle rear side of the oil seal, the entire length of the structure including the steering shaft becomes large, which leads to a decrease in the degree of freedom of the design of the vehicle.

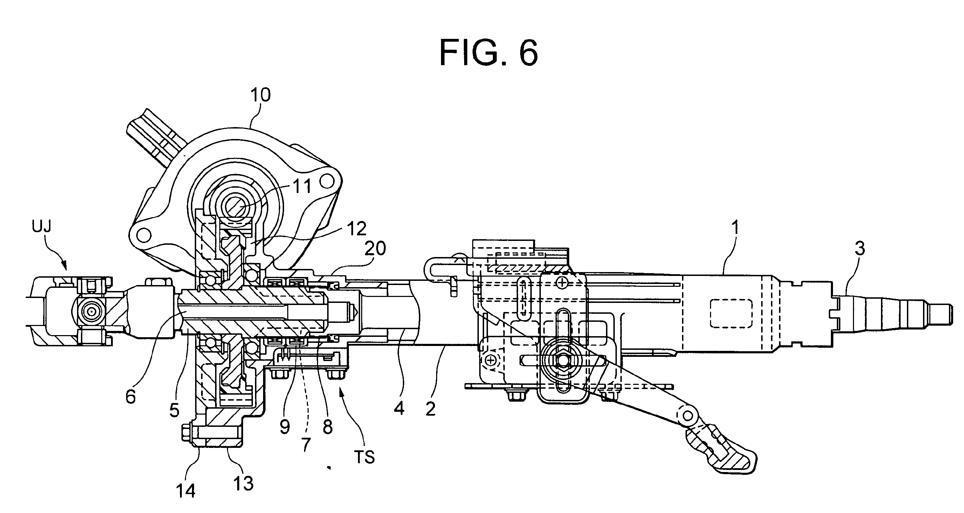

Here, a conventional column assist type electric power steering apparatus will be described with reference to Fig. 6.

In the column assist type electric power steering apparatus shown in Fig. 6, a lower column tube 2 and an upper column tube 1 that constitute a column tube are slidably fitted. A hollow upper shaft 3 and a solid input shaft 4 that are spline-fitted in a slidable manner are rotatably supported inside the column tubes 1, 2.

An output shaft 5 is joined to the vehicle front side end of the input shaft 4 via a torsion bar 6. An intermediate shaft (not shown) is joined to the vehicle front side end of the output shaft 5 via a universal joint UJ.

The base end of the torsion bar 6 is fixed to the vehicle front side end of the input shaft 4 by press-fitting. The torsion bar 6 extends inside the output shaft 5 having a hollow structure, and its end is fixed to an end of the output shaft 5.

A torque sensing mechanism TS is provided on the vehicle rear side of the output shaft 5. Specifically, grooves 7 for torque sensing are provided on the vehicle rear side portion of the output shaft 5, and a sleeve 8 is provided radially outside the grooves 7. The vehicle rear side end of the sleeve 8 is fixed to the vehicle front side end of the input shaft 4 by plastically deforming it by, for example, caulking. A coil 9 is provided radially outside the sleeve 8. Furthermore, a circuit board etc. is provided on the vehicle rear side of the sleeve 8.

A worm wheel 12 is fitted to the output shaft 5. The worm wheel 12 meshes with a worm 11 that is joined to the drive shaft of an electric motor 10.

The worm 11 and the worm wheel 12 are housed by a gear housing 13 and a cover 14, which constitute a housing.

The steering torque generated by driver's operation of the steering wheel (not shown) is transmitted to dirigible wheels that are not shown in the drawings through a steering mechanism (not shown) including the input shaft 4, the torsion bar 6, the output shaft 5, the universal joint UJ, the intermediate shaft (not shown) and a rack and pinion mechanism. The rotational force of the electric motor 10 is adapted to be transmitted to the output shaft 5 via the worm 11 and the worm wheel 12. Thus, an appropriate steering assist torque can be applied to the output shaft 5 by controlling the rotational force and rotation direction of the electric motor 10 appropriately.

In the conventional apparatus shown in Fig. 6, a seal member 20 is provided inside the gear housing 13 between the vehicle rear side of the coil 9 and the vehicle front side of the input shaft 4. In addition, the vehicle front side end portion of the lower column tube 2 is externally fitted onto a cylindrical rear end portion of the gear housing 13 at the vehicle rear side end thereof, and a stopper portion for the collapse stroke is provided on the vehicle rear side end face of the gear housing 13.

Japanese Patent Application Laid-Open No. 2000-190857 teaches to provide sealing means on the outer circumference of a sleeve of a torque sensing apparatus so as to provide a seal between the sleeve and a column tube member joined to a housing.

Japanese Patent Application Laid-Open No. 2003-306156 teaches to provide inside pressure adjusting means between a cylindrical extension housing provided adjacently above a housing and the steering shaft, the inside pressure adjusting means being moved or deformed by the effect of a pressure difference between the inside and outside of the housing to adjust the inside pressure in the interior of the housing. However, this document does not disclose sealing means.

In the apparatus disclosed in International Publication No. WO2005/049406 A1, an annular dust seal to be in sliding contact with the outer circumferential surface of a large diameter portion of a lower shaft (input shaft) is provided on the inner circumferential surface of a lower column tube. However, it is difficult to make the entire length of the steering apparatus short, since it is necessary to dispose the dust seal in such a way as to be kept away from the collapse stroke passage of the lower column at the time of secondary collision.

### DISCLOSURE OF THE INVENTION

The present invention has been made in view of the above described situations, and has as an object to provide an electric power steering apparatus in which the length of the entire structure of the electric power steering apparatus including the steering shaft can be made short while maintaining a collapse stroke that is necessary to absorb impact upon secondary collision, so that the degree of freedom of vehicle design can be increased.

To achieve the above object, an electric power steering apparatus according to the present invention in which a steering torque applied to an input shaft is sensed by a torque sensor and a steering assist torque generated by an electric motor in response to the sensed steering torque is transmitted to an output shaft via a reduction gear mechanism, is characterized in that a seal member is provided between a radially inner portion of a column tube and said input shaft.

Preferably, the seal member is provided between said column tube and said torque sensor.

Furthermore, an electric power steering apparatus according to the present invention in which a steering torque applied to an input shaft is sensed by a torque sensor and a steering assist torque generated by an electric motor in response to the sensed steering torque is transmitted to an output shaft via a reduction gear mechanism, is characterized in that a seal member is provided between said input shaft and said torque sensor.

According to the present invention, by providing the seal member inside the column tube, the length of the entire structure of the electric power steering apparatus including the steering shaft can be made short while maintaining a collapse stroke that is necessary to absorb impact upon secondary collision, so that the degree of freedom of vehicle design can be increased. In addition, when the designed length of the entire structure of the electric power steering apparatus is fixed, the collapse stroke can be designed to be longer than that in the conventional electric power steering apparatuses.

### BRIEF DESCRIPTION OF THE DRAWINGS

Fig. 1 is a longitudinal cross sectional view of an electric power steering apparatus according to a first embodiment of the present invention.
Fig. 2 is an enlarged cross sectional view of the principal portion of the electric power steering apparatus shown in Fig. 1.
Fig. 3 is an enlarged cross sectional view of the principal portion of the electric power steering apparatus according to a modification of the first embodiment of the present invention.
Fig. 4 is an enlarged cross sectional view of the principal portion of the electric power steering apparatus according to a second embodiment of the present invention.
Fig. 5 is an enlarged cross sectional view of the principal portion of the electric power steering apparatus according to a third embodiment of the present invention.
Fig. 6 is a longitudinal cross sectional view of an electric power steering apparatus according to a

### prior art.

### THE MOST PREFERRED MODE FOR CARRYING OUT THE

### INVENTION

In the following, electric power steering apparatuses according to embodiments of the present invention will be described with reference to the drawings.

### (First Embodiment)

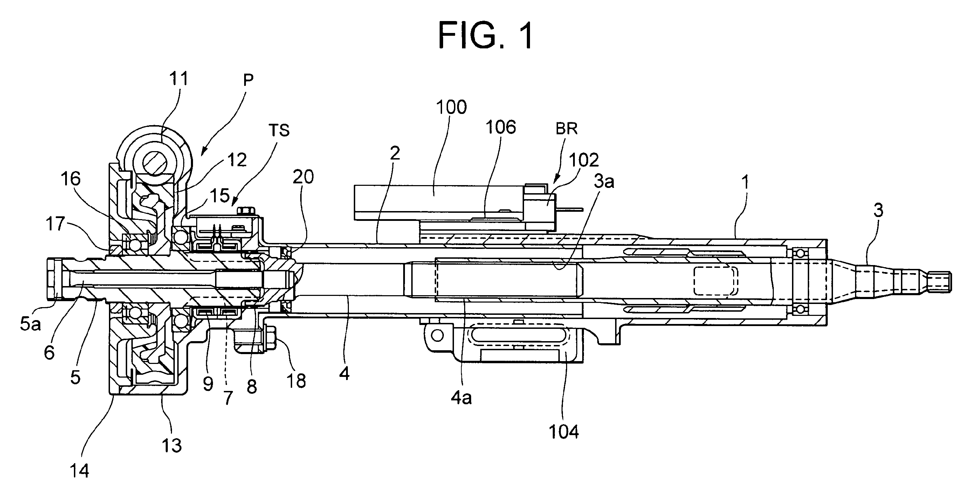

Fig. 1 is a longitudinal cross sectional view of an electric power steering apparatus according to a first embodiment of the present invention.

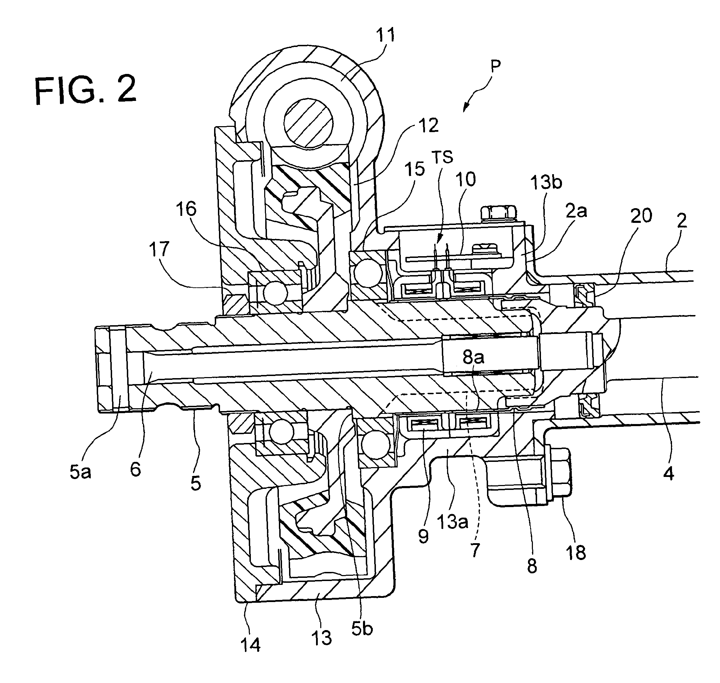

Fig. 2 is an enlarged cross sectional view of the principal part of the electric power steering apparatus shown in Fig. 1. In the electric power steering apparatus according to this embodiment, the steering column tube is composed of an upper column tube 1 and a lower column tube 2, and the vehicle front side end portion of the upper column tube 1 is externally fitted onto the vehicle rear side end portion of the lower column tube in a slidable manner, as shown in Fig. 1.

The upper column tube 1 is mounted on the vehicle body by means of a known bracket mechanism BR. The bracket mechanism BR is composed of a vehicle side bracket 102 fixed on a strength member 100 of the vehicle body and a column side bracket 104 fixedly provided on the upper column tube 1. The column side bracket 104 enables the vehicle side bracket 102 to adjust the tilt and telescopic position of the steering wheel (not shown) by means of a known adjusting mechanism (not shown).

The vehicle side bracket 102 is fixed on the strength member 100 of the vehicle body by a screw 108 via a capsule 106 for detachment upon secondary collision. A known energy absorbing mechanism (not shown) is provided between the upper column tube and the vehicle body so as to absorb impact energy as the capsule 106 for detachment breaks upon secondary collision and the upper column tube 1 moves toward the vehicle front.

A steering shaft is rotatably supported inside both the column tubes 1, 2. The steering shaft is composed of a hollow upper shaft member 3 to which a steering wheel is attached at its vehicle rear side end and a solid lower shaft member 4, which are spline-fitted by a female spline portion 3a provided on the vehicle front side portion of the upper shaft member 3 and the male spline portion 4a provided on the vehicle rear side end portion of the lower shaft member 4 in a slidable manner while enabling torque transmission.

A power assist mechanism P is provided on the vehicle front side of the lower column tube 2. The housing of the power assist mechanism P is composed of a gear housing 13 on the vehicle rear side and a cover 14 fixedly attached thereto on the vehicle front side.

As illustrated specifically in Fig. 2, a vehicle rear side axial extension portion 13a of the gear housing 13 houses a torque sensor TS that will be described later, and the vehicle rear side end of the gear housing 13 fixedly supports the vehicle front side end of the lower column 2 as described below. In this embodiment, specifically, at the vehicle rear side end of the gear housing 13 is an integrally formed thick flange portion 13b that extends radially. A radially outwardly extending flange portion 2a integrally formed at the vehicle front side end of the lower column tube 2 by bending is fastened to the vehicle rear side end surface of the thick flange portion 13b by screw bolts 18. In this embodiment, this flange portion 2a serves as a stopper portion on the column tube that defines the end of the collapse stroke upon secondary collision.

A reduction gear mechanism is accommodated in the space formed by the gear housing and the cover 14 on the vehicle front side.

The vehicle front side portion of the lower shaft member 4 extends into the interior of the gear housing 13 and serves as the input shaft of the power assist mechanism P. (The lower shaft 4 will be hereinafter referred to as the input shaft.)

On the other hand, rolling bearings 15 and 16 are provided, respectively, on the inner circumference of a substantially central portion of the housing 13 with respect to the axial direction and on the inner circumference of the cover 14. The output shaft 5 of the power assist mechanism P is supported coaxially with the input shaft 4 by the pair of rolling bearings 15 and 16. The vehicle rear side end portion of the output shaft 5 extends inside the axial extension portion 13a of the gear housing 13 and substantially into the inside of the vehicle rear end flange portion 13b to face the vehicle front side end face of the input shaft 4.

The base end of a torsion bar 6 is press-fitted and fixed to the enlarged diameter end portion 4c of the input shaft 4 provided at the vehicle front side end thereof. The torsion bar 6 extends in the interior of the output shaft 5 having a hollow structure, and the end portion of the torsion bar 6 is fixed to the end portion of the output shaft 5 by a fixing pin 5a. To the vehicle front side end of the output shaft 5 is joined an intermediate shaft (not shown) via an universal joint (not shown). The vehicle front side end of the output shaft 5 is connected to dirigible wheels via a universal joint (not shown), an intermediate shaft (not shown) and a rack and pinion mechanism (not shown) etc.

A torque sensing mechanism TS is provided in the radially inner space of the axial extension portion 13a of the gear housing 13 that extends on the vehicle rear side of the bearing 15 to the thick flange portion 13b. The torque sensing mechanism TS is composed of a plurality of grooves for torque sensing 7 provided on the outer circumference of the output shaft 5 at regular intervals on the vehicle rear side of the rolling bearing 15, a sleeve 8 provided radially outside the grooves for sensing 7, a coil for torque sensing 9 disposed radially outside the sleeve 8, a circuit board for torque sensing 9a connected to the coil and a harness for providing electrical connection to the exterior etc.

In this embodiment, the vehicle rear side end portion of the sleeve 8 is externally fitted onto the outer circumference of the enlarged diameter end portion 4c of the input shaft 4 and fixed thereto utilizing plastic deformation by, for example, caulking. The sleeve 8 is provided with oblong windows 8a radially opposed to the grooves for torque sensing 7. The coil for torque sensing 9 is provided radially outside the oblong windows 8a of the sleeve 8 in the gear housing 13.

In this embodiment, the circuit board for torque sensing 9a is mounted radially outside the coil 9 and substantially juxtaposed with it along a radial direction in the gear housing 13. In this embodiment, besides the circuit board for torque sensing 9a, components such as harness that is needed in the torque sensing mechanism and provided in the gear housing are disposed in such a way as to overlap with the coil 9 along a radial direction thereby making the axial extension portion 13a of the gear housing short.

A worm wheel 12 is fitted on the output shaft 5 at a position between the rolling bearing 15 and the rolling bearing 16. The radially inner portion of the worm wheel 12 is secured to a shoulder portion 5b provided on the output shaft 5 by a nut 17 with the bearing 16 in between, so that the worm wheel 12 is fixed to the output shaft 5.

The teeth of the worm wheel 12 mesh with a worm 11 that is joined to the drive shaft of an electric motor (not shown) for power assist. The electric motor is fixedly mounted on the gear housing 13 as is well known.

The worm wheel 12 and the worm 11 constitutes a reduction gear mechanism of the power assist mechanism P, and they are accommodated in the housing space formed by the gear housing 13 and the cover 14.

Steering torque generated by operation of the steering wheel (not shown) by the driver is transmitted to the dirigible wheels that are not shown via the steering mechanism not shown including the input shaft 4, the torsion bar 6, the output shaft 5, the universal joint UJ (not shown), the intermediate shaft (not shown) and the rack and pinion mechanism etc. The rotational force of the electric motor (not shown) is adapted to be transmitted to the output shaft 5 via the worm 11 and the worm wheel 12, and an appropriate steering assist torque can be given to the output shaft 5 by appropriately controlling the rotational force and rotation direction of the electric motor (not shown).

In this embodiment, a seal member 20 is press-fitted and fixed between the inner circumferential surface of the lower column tube 2 and the outer circumferential surface of the enlarged diameter portion of the input shaft 4 at a position on the vehicle rear side of the flange portion 2a provided at the vehicle front side end of the lower column tube 2.

The lower column tube 2 is fixedly fastened to the gear housing 13, whereby its position is determined, and the seal member 20 is fixed between the input shaft 4 and the lower column tube 2. The seal member 20 may be held by the gear housing 13 without being directly fixed to the lower column tube 2, insofar as it is positioned radially inside the lower column tube 2 on the vehicle rear side of the flange portion of the lower column tube 2.

According to this embodiment, by providing the seal member 20 in the lower column tube 2, the flange portion 2a of the lower column tube 2 can serve as the column side end of the collapse stroke upon secondary collision, namely it can serve as a stopper portion. In addition, since the sufficient connection strength of the lower column tube 2 and the housing can be achieved by the connection of the flange portion 2a of the lower column tube 2 and the thick flange portion 13b of the gear housing, it is possible to make the length of the entire structure of the electric power steering apparatus including the steering shaft short while maintaining a collapse stroke that is necessary to absorb impact upon secondary collision etc., whereby the degree of freedom of vehicle design can be increased. Furthermore, if the designed length of the entire structure of the electric power steering apparatus is fixed, the collapse stroke can be designed to be longer than that in the conventional electric power steering apparatuses.

According to this embodiment, the length of the housing in the axial direction is made shorter by arranging components of the torque sensing mechanism provided on the vehicle rear side of the gear housing in such a way as to overlap along a radial direction, and the length of the collapse stroke over which the upper column tube moves upon secondary collision can be made longer correspondingly.

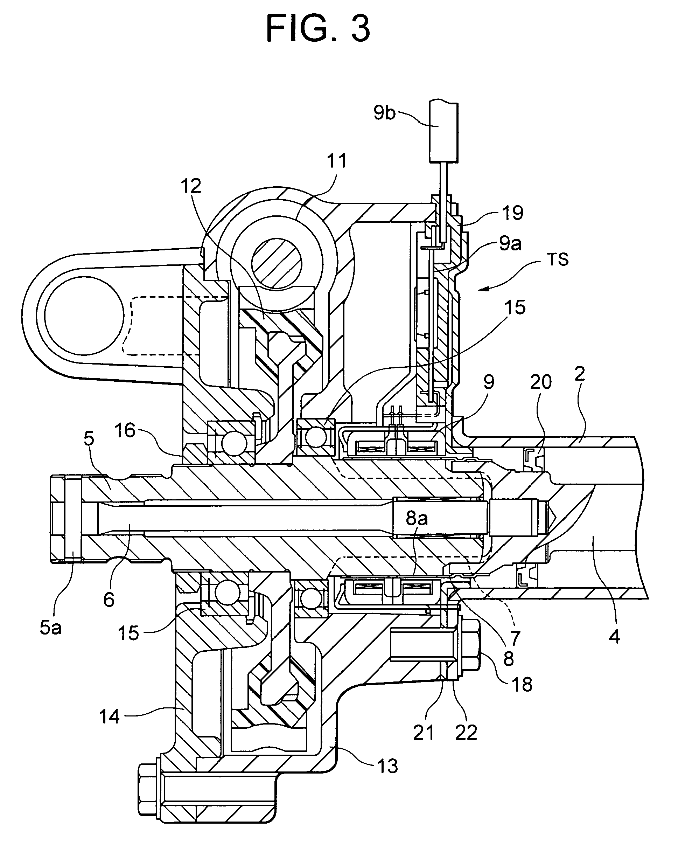

Fig. 3 is an enlarged cross sectional view of the principal portion of an electric power steering apparatus according to a modification of the first embodiment of the present invention.

In the torque sensor mechanism TS according to this modification, coil for torque sensing 9, a circuit board for torque sensing 9a and a harness 9b for the circuit for torque sensing are mounted on an iron plate 19 extending in a radial direction to constitute a torque sensor unit. The coil 9 is opposed to grooves for torque sensing 7 provided on the output shaft and a sleeve 8, and other components such as the circuit board for torque sensing 9a and the harness 9b for the circuit for torque sensing is disposed radially outside the coil 9 and substantially juxtaposed with it along a radial direction in the gear housing 13. According to this structure of this embodiment, the space in the gear housing radially outside the coil for torque sensing, which has been an empty space in the conventional arrangements, can be utilized efficiently. In addition, since in this structure, all the components of the torque sensing mechanism are arranged in a short region with respect to the axial direction, the gear housing that accommodates them can also be made short in the axial direction, and the collapse stroke can be made large correspondingly.

Furthermore, in the assembling process, a bracket 21 of the torque sensing mechanism TS and a radially extending flange 22 of the lower column tube 2 are pressed against a radially extending end face of the gear housing 13, and they are fixed at the same time by a screw bolt for securing 18.

Other structures, operations and advantages are the same as the above described first embodiment.

### (Second Embodiment)

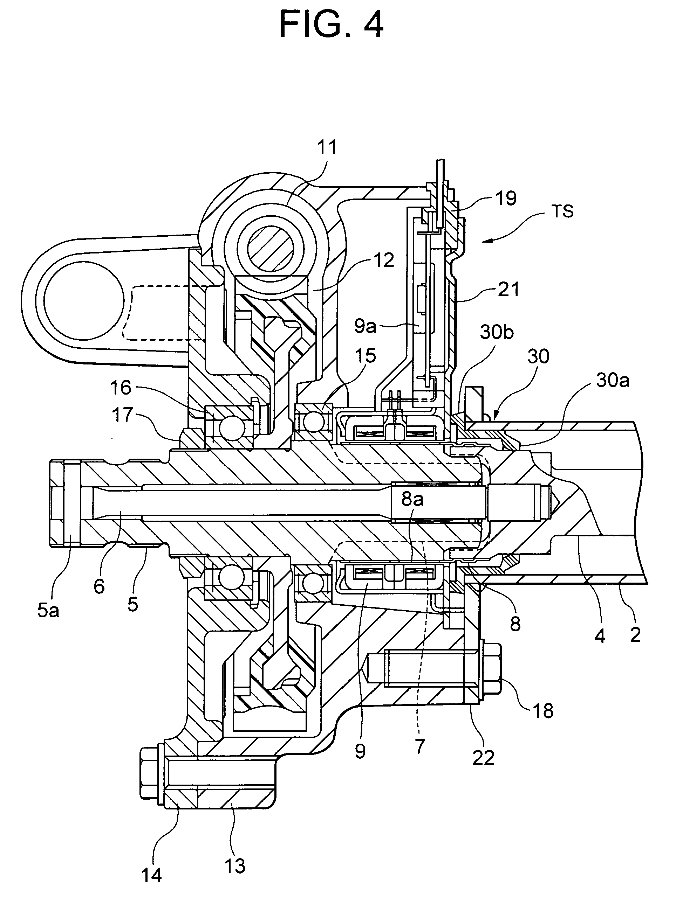

Fig. 4 is an enlarged cross sectional view of the principal portion of an electric power steering apparatus according to a second embodiment of the present invention.

In the above described modification of the first embodiment, the flange portion 2a of the lower column tube 2 is made integral with the lower column tube 2 by welding. In order to bring the vehicle rear side end face of the gear housing and the end face of the flange portion 2a of the lower column tube 2 into contact with each other without any gap, it is necessary to machine them with high precision, which leads an increase in the cost. In view of this, in the second embodiment, a seal member 30 that has a sealing function equivalent to the seal member 20 in the above described first embodiment and can also provide a seal between the lower column tube 2 and the torque sensing mechanism TS is provided between the lower column tube 2 and the torque sensing mechanism TS.

Specifically, the seal member 30 is integrally composed of a seal portion 30a disposed between the radially inner side of the lower column tube 2 and the input shaft 4 and a seal portion 30b disposed between the lower column tube 2 and the torque sensing mechanism TS.

By providing the seal member 30 at the end of the lower column tube 2 as described above, the seal portion 30a of the seal member 30 is compressed between the torque sensing mechanism TS and the lower column tube 2 when the lower column tube 2 is assembled, whereby sealing performance can be enhanced and positioning of the seal portion 30b can be achieved at the same time.

In the assembling process, the seal member 30 is firstly press-fitted to the vehicle front side end of the lower column tube 2, and the flange 22 provided at the vehicle front end of the lower column tube 2 is pressed against the end face of the gear housing 13, and the seal member 30 and the lower column tube 2 are fixed to the end face of the gear housing 13 at the same time by a securing bolt 18.

The seal portion 30b disposed between the torque sensing mechanism TS and the lower column tube 2 may be provided on the torque sensing mechanism TS instead of being integral with the seal portion 30a. In other words, by using a seal member designed to have the function of the seal portion 30b in combination with the seal member 20 according to the first embodiment, an advantageous effect equivalent to the second embodiment can be achieved.

Other structures, operations and advantages are the same as the above described first embodiment.

### (Third Embodiment)

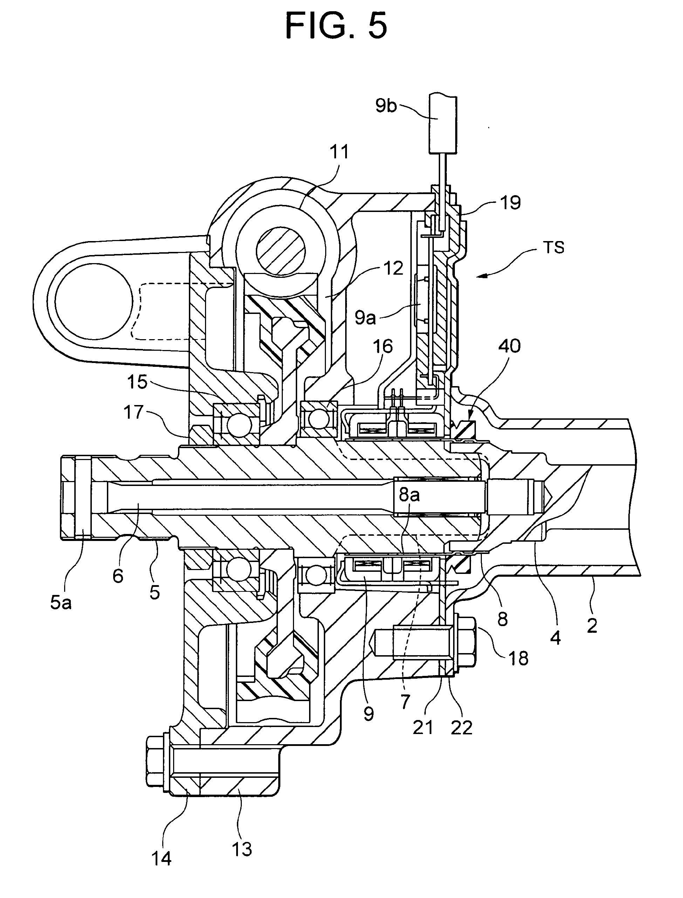

Fig. 5 is an enlarged cross sectional view of the principal portion of an electric power steering apparatus according to a third embodiment of the present invention.

While in the first and second embodiments the seal member is provided on the input shaft, in this embodiment a seal member 40 is provided on the outer circumference of the sleeve 8.

Since the seal member 40 provides a seal between the torque sensor unit and the outer circumferential portion of the sleeve 8, there is no possibility that foreign matters enter the interior of the torque sensing mechanism TS even if there is a gap between the lower column tube 2 and the torque sensor unit.

Other structures, operations and advantages are the same as the above described first embodiment.

The present invention is not limited to the above described embodiments, but various modifications can be made thereto.

## Claims

1. An electric power steering apparatus in which a steering torque applied to an input shaft is sensed by a torque sensing mechanism and a steering assist torque generated by an electric motor in response to the sensed steering torque is transmitted to an output shaft via a reduction gear mechanism, **characterized in that** a seal member is provided between a radially inner portion of a column tube and said input shaft.

2. An electric power steering apparatus according to claim 1, **characterized in that** a radially extending portion is fixedly provided on the vehicle front side end portion of said column tube and fixed to the vehicle rear side end portion of a gear housing by fixing means.

3. An electric power steering apparatus according to claim 2, **characterized in that** said radially extending portion is integrally bent from said column tube.

4. An electric power steering apparatus according to claim 2, **characterized in that** said radially extending portion is welded to said column tube.

5. An electric power steering apparatus according to any one of claims 1 to 4, **characterized in that** a seal member is provided between said column tube and said torque sensing mechanism.

6. An electric power steering apparatus in which a steering torque applied to an input shaft is sensed by a torque sensing mechanism and a steering assist torque generated by an electric motor in response to the sensed steering torque is transmitted to an output shaft via a reduction gear mechanism, **characterized in that,**
a sleeve for the torque sensing mechanism is externally fitted and fixed to said input shaft,
among components of said torque sensing mechanism, at least a coil, a torque sensing circuit board and a harness for the torque sensing circuit are unitized, and
a seal member is provided between the sleeve of said torque sensing mechanism and said unitized torque sensor unit,

7. An electric power steering apparatus comprising:
an input shaft to which a steering force is input;
an output shaft joined to the input shaft via a torsion bar;
a housing that supports the output shaft rotatably and coaxially with said input shaft;
a torque sensing mechanism provided in said housing in the neighborhood of said output shaft to sense a steering torque applied to said input shaft; and
a reduction gear mechanism housed in said housing to transmit a rotational drive generated by an electric motor in response to the steering torque sensed by said torque sensing mechanism to said output shaft at a reduced speed,
**characterized in that,**
said housing fixedly supports a radial flange portion of said column tube by a portion that houses said torque sensing mechanism at a position radially outside said torque sensing mechanism, whereby said flange portion constitutes a stopper for a collapse stroke upon secondary collision, and
a seal member for sealing the portion that houses the torque sensing mechanism is provided between said input shaft and said portion that houses the torque sensing mechanism at a position radially inside the radially inner circumference of said column tube.

8. An electric power steering apparatus according to claim 7, **characterized in that** said torque sensing mechanism comprises:
a groove for torque sensing that extends in the axial direction and is provided on the outer circumferential surface of either one of said output shaft and said input shaft;
a sleeve that is fixedly provided on the other of said output shaft and said input shaft, has a window associated with said groove for torque sensing, and surrounds said output shaft;
a coil for torque sensing that is provided in said housing in such a way as to be opposed to said sleeve in a radial direction; and
a member for composing a torque sensing circuit that is provided in said housing radially outside said coil and juxtaposed with said coil along a radial direction.

9. An electric power steering apparatus according to claim 8, **characterized in that** said coil and said member for composing the torque sensing circuit is unitized on a board that extends in a radial direction.

10. An electric power steering apparatus according to any one of claims 7 to 9, **characterized in that** said seal member is provided on the vehicle rear side of the flange portion of said column tube.
